# EUROPEAN PATENT APPLICATION

(11) **EP 1 185 137 A2**
(43) Date of publication of application: **06.03.2002**
(21) Application number: 01307385.3
(22) Date of filing: 30.08.2001
(51) Int. Cl.: H04R 1/10

(54) **Headphone device**

(30) Priority: 31.08.2000 JP 2000263495; 31.08.2000 JP 2000263496
(71) Applicant: Sony Corporation, Tokyo 141-0001 (JP)
(72) Inventor: Murozaki, Katsunori, Shinagawa-ku, Tokyo (JP); Nageno, Koji, Shinagawa-ku, Tokyo (JP)
(74) Representative: Ayers, Martyn Lewis Stanley

(57) **Abstract**

A headphone device is comprised of a headband assembly worn on the head and a headphone main body attached to at least one end of the headband assembly. The headphone device is provided with an ear device that prevents slipping when worn and stabilizes wearability. The headphone main body is attached to the headband assembly in a rotatable manner so that the axis of rotation may be inclined with the center line of the headphone main body. Thus, the headphone main body can be and matched into the inclination of the ear and so the headphone device has stabilized wearability as well as an improved feeling when worn and sound quality.

## Description

The present invention relates to a headphone device and in particular, to a headphone device with stabilized wearability.

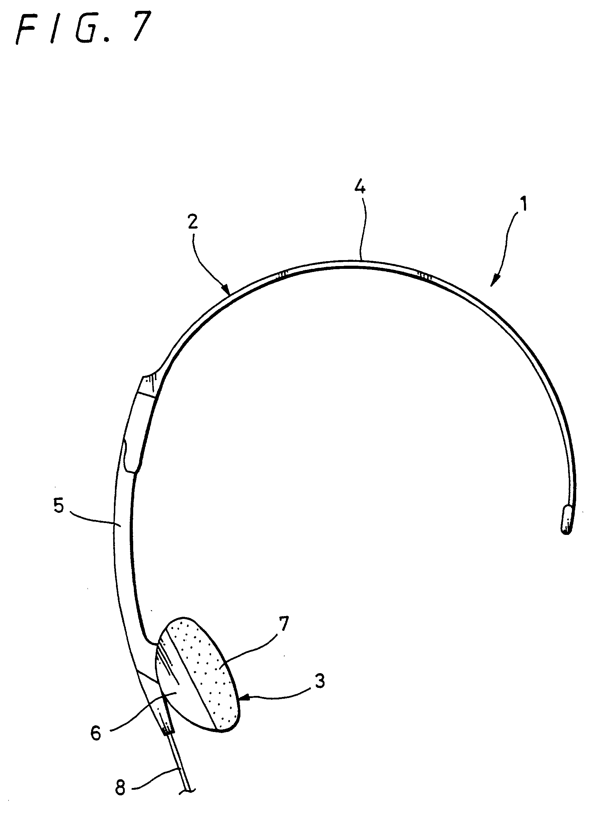

To start with, the construction of the conventional headphone device shown in Fig. 7 of the accompanying drawings will be described.

This headphone device 1 is comprised of a headband assembly 2 worn on the head and a headphone main body 3 that is attached to at least one end of the headband assembly 2.

The headband assembly 2 is comprised of an arch-shaped headband 4 and a hanger 5 linked to one end of the headband 4. A headphone main body 3 is attached to the inside at the lower end of the hanger 5.

The hanger 5 can be adjusted by a sliding expansion / contraction adjustment with respect to the headband 4. In other words, the position of the headphone main body 3 can be freely adjusted by adjusting the expansion / contraction of the hanger 5 with respect to the headband 4.

The headphone main body 3 includes an internal speaker unit contained in a housing 6 that is fixed to the hanger 5 and a sponge-like ear pad 7 is attached in such a manner that it covers the sound emitting surface of the speaker unit.

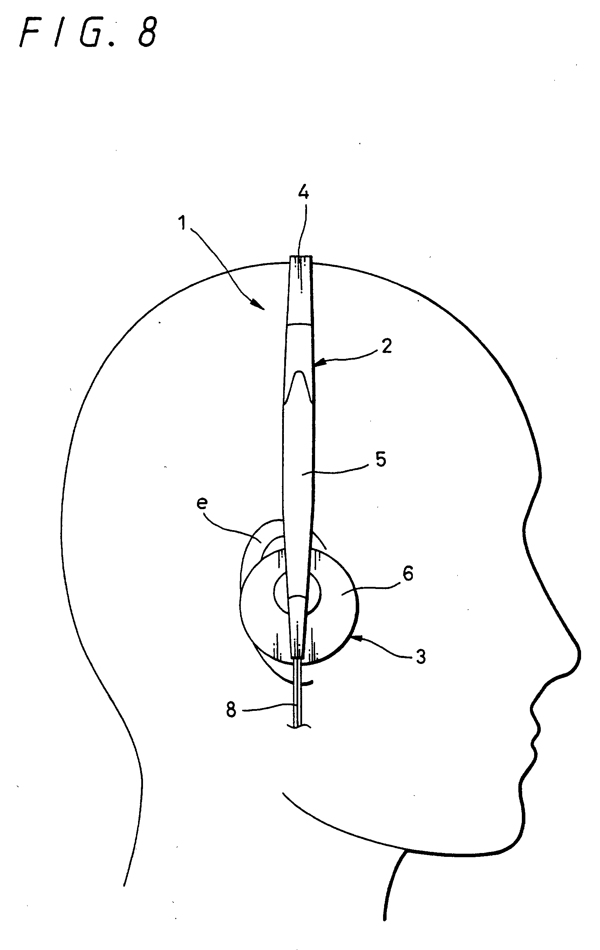

In the figure 8 denotes a cord and the speaker unit internally contained in the housing 6 of the headphone main body 3 is electrically connected to an acoustic device through this cord 8.

As shown in Fig. 8, the headphone device 1 constructed in this manner is used with the headband assembly 2 being worn on the head and the ear pad of the headphone main body 3 being pressed on the ear e.
This construction the headphone device allows the headphone main body 3 to be pressed on either left ear or right ear.

A conventional headphone device as described above however, can easily slip when worn. In particular, there have been many occurrences in which the headphone device slips down feel from the head of the user due to vibrations when worn for a long period of time while the user is moving.

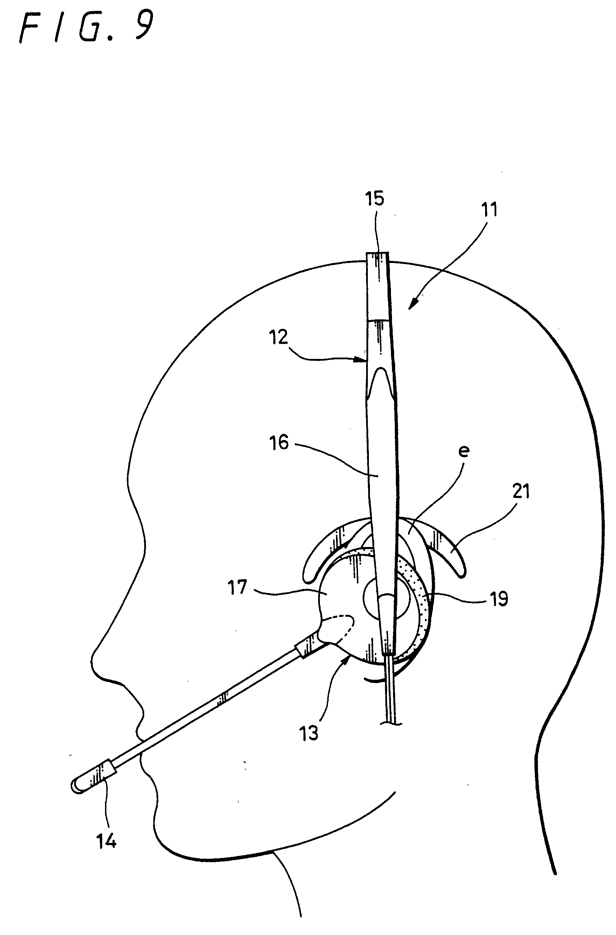

Moreover, as shown in Fig. 9, the ear e is inclined with the side of the head as seen from above the head. However, a conventional headphone device has the housing 6 of the headphone main body 3 fixed to the headband assembly 2. Consequently, the wearing surface 7a of the ear pad 7 does not correspond to the inclination of the ear e.

For this reason, a conventional headphone device had disadvantages of a strange feeling when worn and sound escaping from the gap that exists between the headphone main body 3 and the ear e thereby reducing the sound quality.

The object of the present invention is to provide a headphone device that can solves these types of problems and can improve the feeling when worn and sound quality by means of matching the headphone main body to the inclination of the ear.

In order to achieve the above-mentioned objects, the present invention provides a headphone device comprised of a headband assembly worn on the head, and a headphone main body that is attached to at least one end of the headband assembly and has an internal speaker unit, wherein the headphone device is provided with an ear device that hangs on the ear to prevent slipping when worn.

By providing this ear device the headphone device of the present invention can have stabilized wearability without its slipping when worn.

The invention will now be described by way of non-limitative examples with reference to the accompanying drawings, in which:
Fig. 1 is a front view showing an embodiment of the headphone device according to the present invention;
Fig. 2 is a side view showing the shape of the ear device in the headphone device of the embodiment;
Fig. 3 is a side view showing the headphone device of the embodiment being worn (headphone main body is pressed on the right ear);
Fig. 4 is a front view of the principal parts of the headphone device in of the embodiment;
Fig. 5 is an explanatory view showing examples of different constructions of the ear device.
Fig. 6 is an explanatory view showing examples of different shapes of the ear device;
Fig. 7 is a front view showing a conventional headphone device.
Fig. 8 is a side view showing a conventional headphone device being worn.
Fig. 9 is a side view showing the headphone device of the embodiment being worn (headphone main body is pressed on the contact with the left ear);

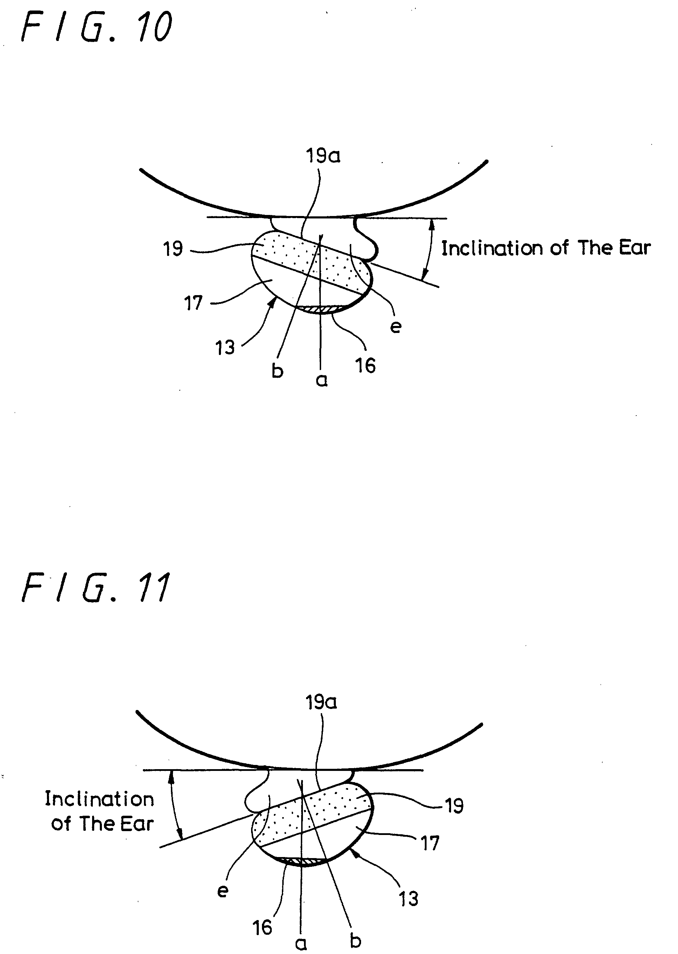

Fig. 10 is an explanatory view showing the headphone main body of the headphone device of the embodiment being pressed on the left ear;

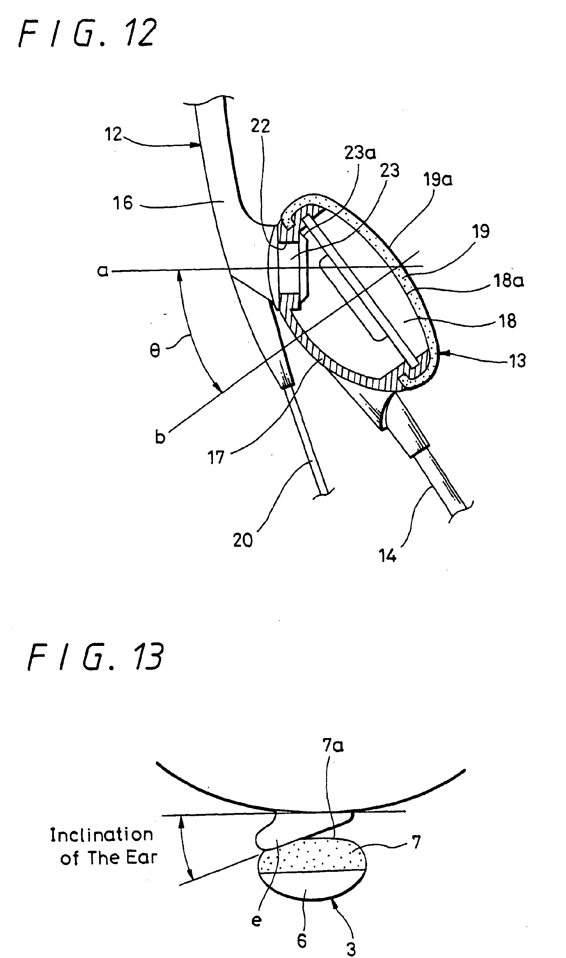

Fig. 11 is an explanatory view showing the headphone main body of the headphone device of the embodiment being pressed on the right ear;
Fig. 12 is a cross sectional view showing the construction of the principal parts (portion where the headphone main body is attached to the headband assembly) of the headphone device of the embodiment; and
Fig. 13 is an explanatory view showing the headphone main body of the headphone device of the embodiment being pressed on the ear.

In the following an embodiment of the present invention will be described with reference to the drawings.

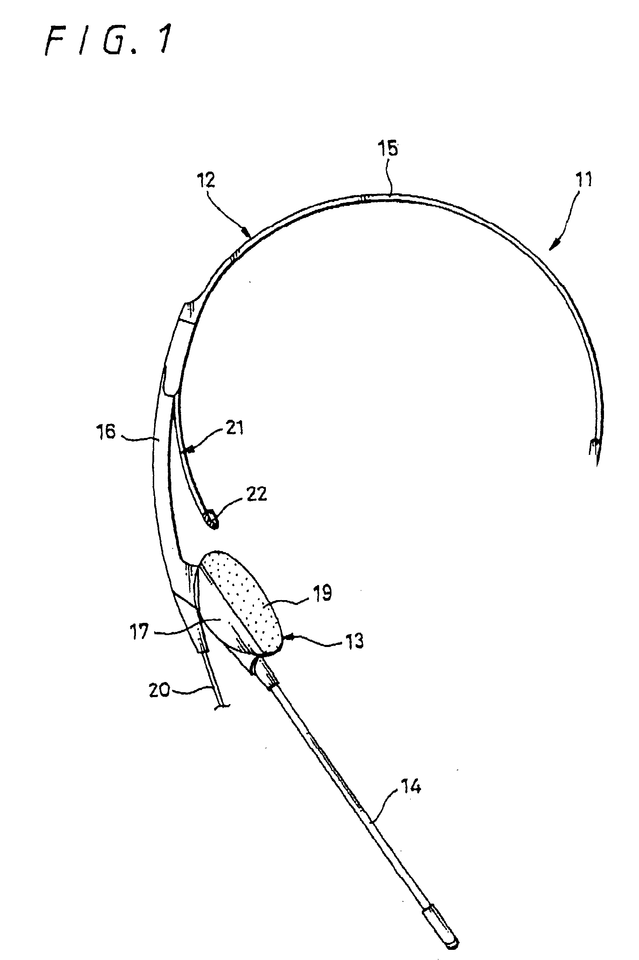

Fig. 1 is a front view of the headphone device 11 according to the present invention.

This headphone device 11 is a so-called headset and includes by a headband assembly 12 that is worn on the head, a headphone main body 13 that is attached to at least one end of the headband assembly 12, and a microphone device 14 disposed in such a manner that it extends from the headphone main body 13.

The headband assembly 12 is comprised of an arch-shaped headband 15 that are both molded and a hanger 16 linked to one end of the headband 15. The headphone main body 13 is attached to the inside at the lower end of the hanger 16.

The hanger 16 can be adjusted by a sliding expansion / contraction adjustment with respect to the headband 15. In other words, the position of the headphone main body 13 can be freely adjusted by means of adjusting the expansion / contraction of the hanger 16 with respect to the headband 15 in a rotatable manner.

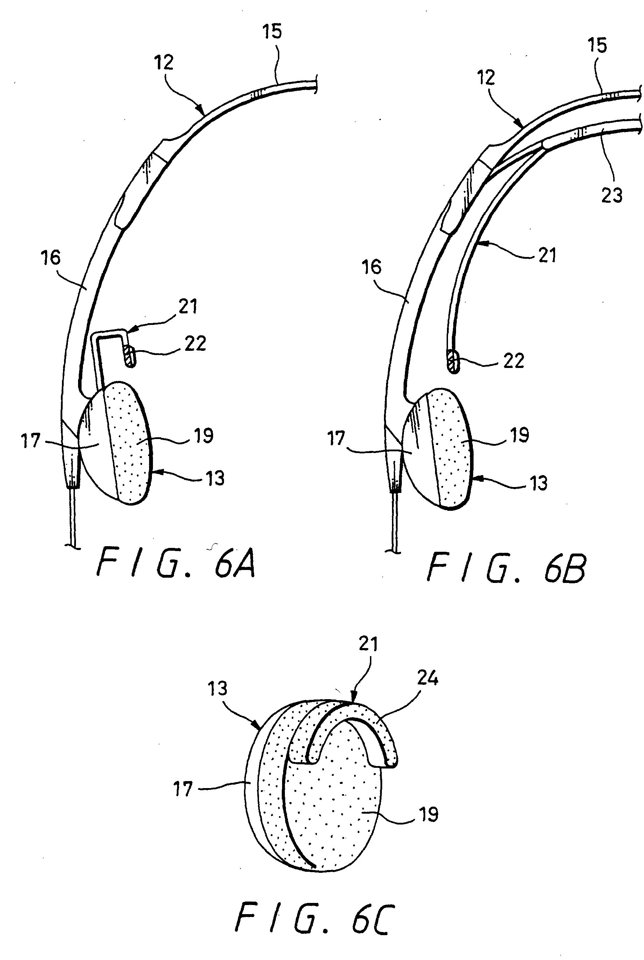

As shown in Fig. 6, the headphone main body 13 contains internally a speaker unit 18 in a housing 17 molded of a plastic material. A sponge-like ear pad 19 is attached in such a manner that it covers the sound emitting surface 18a of the speaker unit 18.

In the figure, 20 denotes a cord. The speaker unit 18 internally contained in the housing 17 of the headphone main body 13 and a microphone unit internally contained in the microphone device 14 are electrically connected to an acoustic device through this cord 20.

In addition, an ear device 21 is integrally provided on the inside of the hanger 16 of the headband assembly 12 in this headphone device 11.

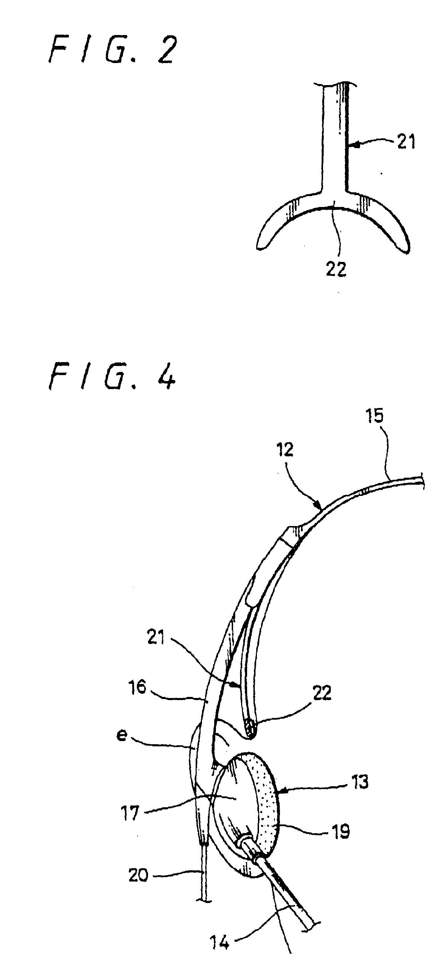

The ear device 21 is formed of a piece of plastic material integrated with and the hanger 16 comprises an arm 22 that extends from the upper portion of the hanger 16 downward. As shown in Fig. 2 seen from the side, an arch shape is formed on the end of the arm 22.

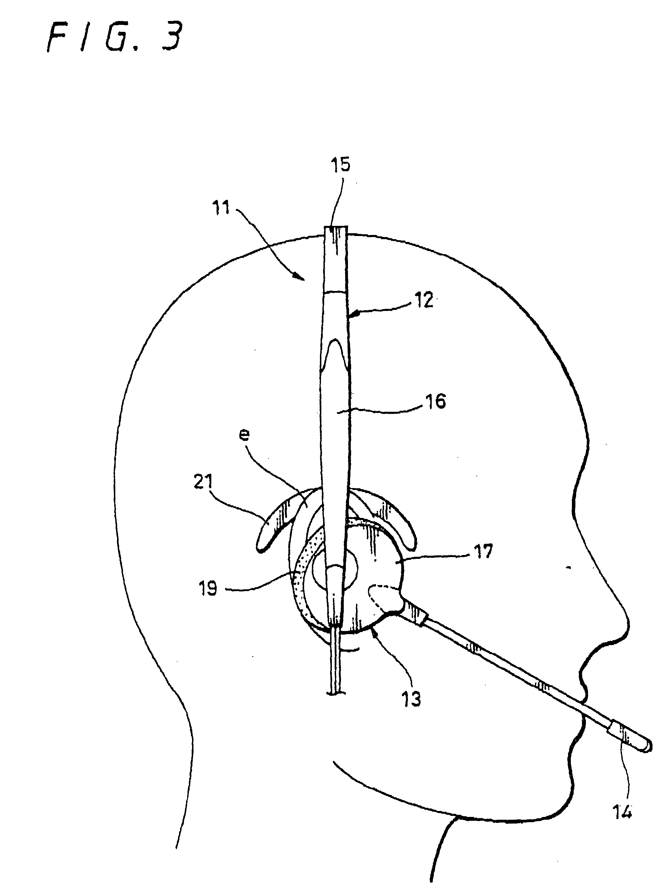

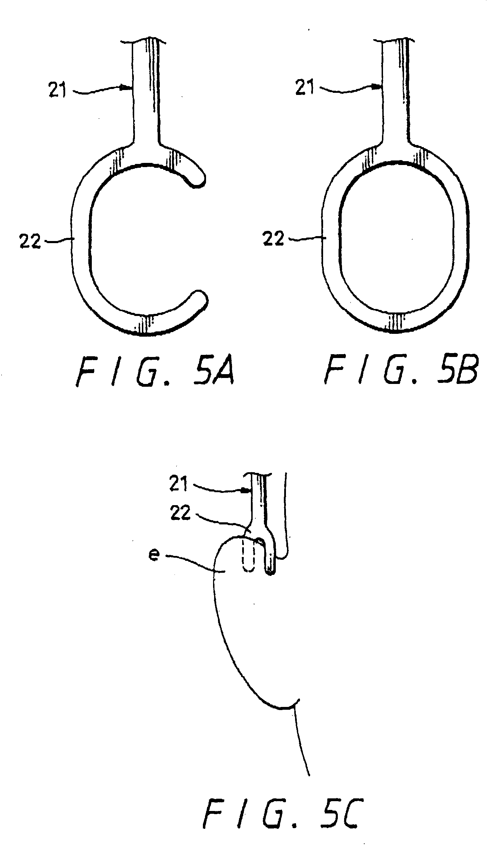

As shown in Fig. 3, the headphone device 11 comprised as described above is worn by placing the headband assembly 12 on the head with the ear pad 19 of the headphone main body 13 pressed on the ear e. At this time, as shown in Fig. 3 and Fig. 4, the headphone device 11 is securely worn without any slipping off the ear e due to the fact that the ear device 21 is hung on the ear e.

Further, because the ear device 21 acts to securely maintain the wearing state of the headphone device 11 even if the user moves about while wearing the headphone device 11, stabilized wearability can be obtained without the headphone device slipping down from the head.

Various shapes for the ear device 21 other than the shape shown in Fig. 2 can be considered.

Fig. 5A to Fig. 5C show another shape examples of the ear device 21.

Fig. 5 A shows an example of the end of the arm 22 (portion hung on the ear) of the ear device 21 with a C-shape. Fig. 5 B shows the end of the arm 22 with a ring shape.

In addition, as shown in Fig. 5 C, the ear device 21 can also have a shape in which the ends of the arm 22 pinch the ear.

Fig. 6A to Fig. 6C show other structure examples of the ear device 21.

Namely, Fig. 6 A shows an example that the ear device 21 is provided in such a manner that it extends outward from the housing 17 of the headphone main body 13.

Fig. 6 B shows an example that, when a headphone device is provided with a suspender 23 on the inside of the headphone assembly 12, the ear device 21 extends from the suspender 23.

As shown in Fig. 6 C of a headphone device may be provided with an arch-shaped protruding portion 24 that functions as the ear device 21 on the surface where the ear pad 19 of the headphone main body 13 is pressed. In this case, the protruding portion 24 that functions as the ear device 21 can either be formed integrated with the ear pad 19 as one unit or formed as a separate device attached to the ear pad 19.

Although embodiments of the present invention have been described above, this invention is not limited to those examples.

For instance, although there have been disclosed examples in which the present invention is applied to a headphone device that has the headphone main body 13 only on one end of the headband assembly 12, the present invention can also be applied to a headphone device that has the headphone main body 13 on both ends of the headband assembly 12. In this case, the beneficial effect of the present invention is especially enhanced if the ear device 21 is provided on both ends of the headband assembly 12.

Furthermore, the structure and shape of the ear device 21 is not limited to the examples described above and in short it can be a device that hangs on the ear when wearing a headphone device.

Moreover, the ear device 21 can also freely be attached or detached.

Having described preferred embodiments of the present invention with reference to the accompanying drawings, it is to be understood that the present invention is not limited to the above-mentioned embodiments and that various changes and modifications can be effected therein by one skilled in the art without departing from the scope of the present invention as defined in the appended claims.

## Claims

1. A headphone device comprised of a headband assembly worn on the head and a headphone main body that is attached to at least one end of said headband assembly and has an internal speaker unit, wherein
said headphone device is provided with an ear device that hangs on the ear and prevents slipping when worn.

2. A headphone device according to claim 1, wherein the ear device is in the shape of an arch.

3. A headphone device according to claim 1, wherein the ear device is c-shaped.

4. A headphone device according to claim 1, wherein the ear device is in the shape of a ring.

5. A headphone device according to claim 1 or 2, wherein the ear device extends outward from the housing of the headphone main body.

6. A headphone device according to claim 1 or 2, wherein the ear device extends from a suspender attached to the headband assembly.

7. A headphone device according to any one of the preceding claims, wherein said headphone main body is attached to said headband assembly in a rotatable state so that the axis of rotation may be inclined with the center line of said headphone main body.

8. A headphone device comprised of a headband assembly worn on the head and a headphone main body that is attached to at least one end of said headband assembly and has an internal speaker unit, wherein
said headphone main body is attached to said headband assembly in a rotatable state so that the axis of rotation may be inclined with the center line of said headphone main body.
